# EUROPÄISCHE PATENTSCHRIFT

(11) **EP 1 398 221 B1**
(45) Veröffentlichungstag und Bekanntmachung des Hinweises auf die Patenterteilung: **16.03.2005**
(21) Anmeldenummer: 03017670.5
(22) Anmeldetag: 14.08.2003
(51) Int. Cl.: B60R 13/08, B60R 13/02, B60R 21/04

(54) **Fahrzeugtür mit Folie mit Schaumstoffschicht**
Vehicle door provided with a film having a foam layer
Porte d'automobile avec une feuille avec une couche de mousse

(30) Priorität: 14.09.2002 DE 10242761
(43) Veröffentlichungstag der Anmeldung: 17.03.2004
(73) Patentinhaber: DaimlerChrysler AG, 70567 Stuttgart (DE)
(72) Erfinder: Fütterer, Michael, 71157 Hildrizhausen (DE)

(56) Entgegenhaltungen:
- DE-A- 2 524 633
- DE-A- 3 325 437
- DE-A- 4 416 972
- US-A- 6 070 905

## Beschreibung

Die Erfindung betrifft eine Fahrzeugtür mit einer zwischen einem Türinnenteil und einer Türinnenverkleidung angeordneten Folie mit den Merkmalen des Oberbegriffs des Anspruchs 1.

Folien sind in den verschiedensten Ausführungsformen bekannt und aus dem modernen Kraftfahrzeugbau aufgrund ihrer vielfältigen Einsatzmöglichkeiten nicht mehr wegzudenken. Je nach Material und Ausführungsform bieten sie z.B. Schutz gegen von außen eindringende Nässe oder Feuchtigkeit und Sonneneinstrahlung.

Aus der gattungs bildenden DE 35 10 018 C2 ist eine zwischen Karosserie und Türinnenverkleidung eines Fahrzeugs angeordnete Folie zum Schutz gegen von außen in den Fahrgastraum eindringende Nässe bekannt. Auf die Folie ist eine Schaumstofflage kaschiert, welche ihrerseits im Bereich eines zu verklebenden Randes vollständig oder nahezu bis auf Massivkunststoff verdichtet ist, wobei jedoch neben den verdichteten Bereichen randseitig ein schmaler, unkomprimierter Schaumstoffsteg belassen ist. Dieser Schaumstoffsteg wird bei der Montage der Türinnenverkleidung zusammengepresst, wobei es aber nicht zu einer Überlastung der im Bereich der verdichteten Reihen angeordneten Montageelemente kommen kann. Vielmehr hält der komprimierte Steg einen Zusammenhalt von Schaumstofflage, Folie und Tür aufrecht. Wird die Verklebung zwischen Tür und Folie durch Alterung, Verarbeitungsfehler oder dergleichen an einzelnen Stellen undicht, sorgt der umlaufende, komprimierte Schaumstoffsteg zudem für eine zusätzliche Abdichtung, die insbesondere bei hoher Fahrgeschwindigkeit ein Eindringen von Zugluft in den Fahrgastraum verhindert. Schließlich haben die verdichteten Bereiche der Schaumstofflage den Vorteil, dass sie kein Wasser leiten und damit ein Vordringen von Feuchtigkeit zu den unkomprimiert Bereichen der Schaumstofflage verhindern. Hierbei handelt es sich zwar um eine Folie mit aufkaschierter Kunststofflage zum Schutz vor Zugluft und Feuchtigkeit, die Folie ist jedoch als herkömmliche Kunststofffolie mit im wesentlichen ebener Form ausgebildet.

Aus der DE 36 15 436 A1 ist eine Fahrzeugtür bekannt, deren Innenseite unter Energieverzehr deformierbar ist. Dabei ist die Innenseite in unterschiedliche, den einzelnen Körperregionen der Fahrzeuginsassen in ihrer Widerstandsfähigkeit angepasste, Abschnitte aufgeteilt. Desweiteren kann die Steifigkeit zum hinteren Türrahmen hin zunehmen, so dass größere Fahrzeuginsassen bei nach hinten verstelltem Sitz eine insgesamt steifere Türinnenseite vorfinden. Die Fahrzeugtür soll das Verletzungsrisiko bei einem Seitenaufprall mindern. Hierbei handelt es sich jedoch um Bauteile die als Kunststoffschaumteile hergestellt und in eine Fahrzeugtür integriert sind, nicht jedoch um Folien. Zudem dienen die beschriebenen Kunststoffschaumteile vornehmlich dem Schutz von Fahrzeuginsassen bei einem Seitenaufprall und nicht dem Schallschutz oder dem Schutz vor Zugluft in der Fahrzeugtür.

Aus der DE 25 24 633 A1 ist ein Fahrzeug bekannt, dessen Insassenraum mit einem energieabsorbierenden Element ausgestattet ist. Dieses Element ist ein Formteil aus synthetischem, starrem Kunststoffschaum mit mehreren integral ausgebildeten Vorsprüngen, die sich in Richtung auf die Rückseite des Formteils zu erstrecken. Dabei ist eine Schicht aus kraftverteilendem, halbsteifem Kunststoffschaum vorgesehen, der die Vorderseite des Formteils bedeckt. Hierbei handelt es sich um Formteile, die im Falle eines Unfalls die Unfallfolgen für die Insassen des Fahrzeugs mindern. Weitere Aufgaben, wie z.B. Schall- und/oder Feuchteschutz, sollen jedoch von dem Formteil nicht übernommen werden.

Aus der DE 33 25 437 A1 ist ein mehrschichtiges Formteil zur Innenverkleidung von Fahrzeugen bekannt, bei dem wenigstens eine Schicht aus bindemittelhaltigem, verpresstem Zelluloseoder Lignozellulose-Fasermaterial besteht. Hierbei sind eine die Sichtseite bildende Außenschale und eine Innenschale punkt- und/oder linienförmig derart miteinander verbunden, dass zwischen Außen- und Innenschale mindestens ein die statische Belastbarkeit des Formteils vorgebender Hohlraum ausgebildet ist, wobei die Innenschale in den Bereichen, an denen sie mit der Außenschale verbunden ist, napf- und/oder rinnenförmige Eindrücke, den gewünschten kammerförmigen Hohlraum definierend, besitzt. Dies gestattet es, die Festigkeit des Holz-Faser-Werkstoffes voll auszunutzen und die Wanddicke der Außen- und Innenschale gewichtsreduzierend zu verringern.

Schließlich ist aus der US 6,070,905 eine Innenbeschichtung für ein Kraftfahrzeug bekannt, welche aus einer schweren Schicht und darauf angeordneten stoßabsorbierenden Elementen aufgebaut ist. Die Beschichtung ist dabei vorzugsweise in einem fahrer- und/oder beifahrerseitigen Fußraum einer Fahrgastzelle angeordnet und soll Verletzungen der Füße und/oder Beine bei einem Unfall verhindern oder zumindest abmildern. Ein flächenmäßiger Anteil der absorbierenden Element beträgt dabei ca. 40% bis 60% der Gesamtfläche der Beschichtung.

Die vorliegende Erfindung beschäftigt sich mit dem Problem, für eine Fahrzeugtür eingangs erwähnter Art eine verbesserte Ausführungsform anzugeben, wobei insbesondere eine bessere Dämmung der Fahrzeugtür erreicht werden soll.

Dieses Problem wird durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, für eine seitliche Fahrzeugtür eine Folie vorzusehen, die zwischen einem, mit Durchbrüchen versehenen, Türinnenteil der Fahrzeugtür und einer Türinnenverkleidung angeordnet ist und einerseits zum Schutz vor Zugluft und andererseits zum Schallschutz dient. Dazu ist die Folie als Schwerfolie ausgebildet und einseitig mit einer aufgebrachten bzw. aufkaschierten Schaumstofflage versehen. Die Schaumstofflage ist durch einen offenenporigen Dämmschaum gebildet, der integral in Richtung der Türinnenverkleidung als Rippen ausgebildete Vorsprünge aufweist. Die Vorsprünge des Dämmschaums berühren dabei die Türinnenverkleidungen und bilden ein Kammersystem zwischen der Türinnenverkleidung und dem Dämmschaum. Durch diese Anordnung wird der Hohlraum zwischen dem Türinnenteil und der Türinnenverkleidung in kleine Kammern unterteilt, wodurch der in der Fahrzeugtür vorhandene Resonanzkörper verkleinert und der Schallschutz verbessert wird. Durch die Ausbildung der Schaumstofflage als offenporiger Dämmschaum wird die schalldämpfende Wirkung zusätzlich unterstützt. Gleichzeitig wird die im Türinnenraum bestehende Zugluftproblematik durch die Rippenausbildung der Schaumstofflage und die damit verbundene Kammerbildung unterbunden.

Entsprechend einer besonders günstigen Ausführungsform kann vorgesehen sein, dass die Durchbrüche des Türinnenteils, in Richtung der Türinnenverkleidung, vollständig umlaufend von den Vorsprüngen des Dämmschaums umrandet sind. Dadurch sind die Durchbrüche, wie sie z.B. für Schließvorrichtungen oder Befestigungshaken notwendig sind, gegen Zugluft abgedichtet. Zudem wird erreicht, dass die Schallbrückenwirkung der Durchbrüche reduziert wird.

Zweckmäßig kann vorgesehen sein, dass die Schwerfolie zumindest im Bereich der Durchbrüche mit dem Türinnenteil verklebt ist. Klebeverbindungen sind heutzutage schnell, kostengünstig und dauerhaft herzustellen. Zudem bieten sie den Vorteil, dass für verschiedene Türinnenteile bzw. Folien lediglich der Verlauf der Kleberaupe geändert werden muss. Desweiteren wird ein einfacher Rückbau durch Abreißen der Folie vom Türinnenteil ermöglicht, der der zunehmend geforderten Recyclingfähigkeit der Fahrzeuge Rechnung trägt.

Bei einer weiteren vorteilhaften Ausgestaltung der erfindungsgemäßen Lösung ist vorgesehen, dass die Schwerfolie als EPDM-Folie mit mindestens 0,8 oder 0,9 Kilogramm je Quadratmeter ausgebildet ist. EPDM ist ein synthetischer und extrem belastungsfähiger Kautschuk. Aufgrund des hohen Gewichts der Schwerfolie verbunden mit dem aufkaschierten Dämmstoff wird die schalldämmende Eigenschaft der erfindungsgemäßen Lösung zusätzlich begünstigt.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

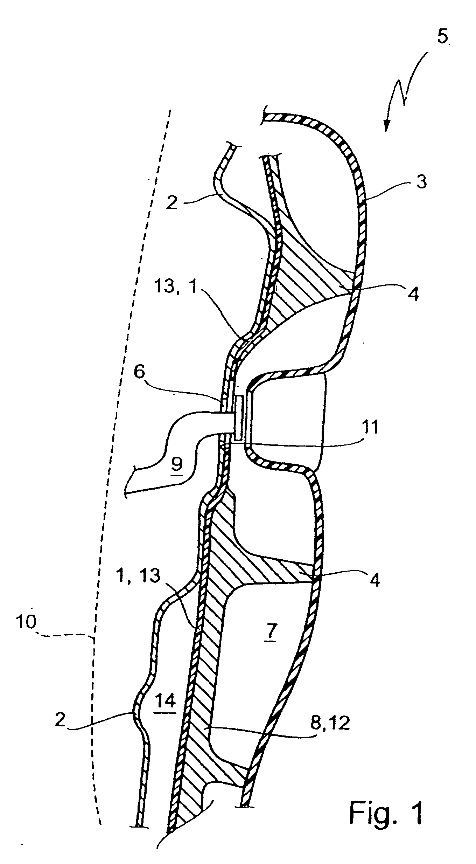

Die einzige Figur 1 zeigt schematisch einen Querschnitt durch eine Fahrzeugtür mit der erfindungsgemäßen Folie.

Entsprechend Fig. 1 ist eine seitliche Fahrzeugtür 5 eines im übrigen nicht dargestellten Kraftfahrzeugs ausgeführt, welche im wesentlichen von innen nach außen durch eine Türinnenverkleidung 3, ein rohbauseitiges Türinnenteil 2 sowie ein nur gestrichelt dargestelltes Außenblech 10 gekennzeichnet ist. Das Türinnenteil 2 und das Außenblech 10 sind in bekannter Weise miteinander verbunden und schwenkverstellbar an einer nicht dargestellten Fahrzeugkarosserie angebracht. Die Türinnenverkleidung 3 ist an dem Türinnenteil 2 befestigt.

Das Türinnenteil 2 ist mit Vertiefungen versehen und dient der Aufnahme weiterer im einzelnen nicht näher spezifizierter Fahrzeugbauteile, wie z.B. Elektromotoren für Fensterheber und Schließvorrichtungen. Exemplarisch weist das Türinnenteil 2 in Fig. 1 einen Durchbruch 6 auf, durch den ein Befestigungshaken 9 der Türinnenverkleidung 3 hindurch ragt.

Prinzipiell sind weitere Durchbrüche 6 zur Durchführung von nicht dargestellten Leitungen, Gestängen oder Vorrichtungen denkbar. Im Bereich des in Fig. 1 dargestellten Durchbruchs 6 ist die Türinnenverkleidung 3 nahezu vollständig an das Türinnenteil 2 herangeführt. Eine Berührung oder Verbindung des Türinnenteils 2 mit der Türinnenverkleidung 3 im Bereich des Durchbruchs 6 ist je nach Konstruktion möglich.

Zwischen dem Türinnenteil 2 und der Türinnenverkleidung 3 ist eine als Schwerfolie 13 ausgebildete Folie 1 angeordnet, welche zumindest im Bereich des Durchbruchs 6 mit dem Türinnenteil 2 verklebt oder auf andere, geeignete Weise damit verbunden ist. Die Schwerfolie 13 ist vorzugsweise als EPDM-Folie ausgebildet und weist ein Gewicht von mehr als 0,8 kg/m² auf, wodurch sie allein aufgrund ihres Gewichts und ihrer Elastizität schalldämpfende Eigenschaften besitzt. EPDM steht dabei für Ethylen-Propylen-Teer-Polymer.

Zusätzlich zu den oben beschriebenen Klebestellen sind weitere Klebestellen, zur Verminderung der Schwingungen der Schwerfolie 13, sind denkbar. Durch eine umlaufend geschlossene Verklebung der Schwerfolie 13 mit den Rändern 11 im Bereich des Durchbruchs 6 wird neben der Abdichtung gegen Schall zusätzlich eine Abdichtung gegen Feuchtigkeit erreicht. Außerdem ist die gesamte Folie 1 mit dem Türinnenteil 2 randseitig umlaufend verklebt, um einen Feuchtigkeitsdurchtritt zu vermeiden.

Die Schwerfolie 13 trennt einen als Kammersystem 7 ausgebildeten Hohlraum 14, der einerseits durch das Türinnenteil 2 und andererseits durch die Türinnenverkleidung 3 begrenzt ist und einen Resonanzkörper in der Fahrzeugtür 5 bildet.

Auf die Schwerfolie 13 ist in Richtung der Türinnenverkleidung 3 eine Schaumstofflage 8, die als offenporiger Dämmschaum 12 ausgebildet ist, aufgebracht bzw. aufkaschiert. Aufgrund der offenporigen Struktur des Dämmschaums 12 wird, insbesondere im höherfrequenten Bereich, eine zusätzliche schallabsorbierende Wirkung erreicht.

Der Dämmschaum 12 weist integral in Richtung der Türinnenverkleidung 3 abstehenden Vorsprünge 4 auf, die die Türinnenverkleidung 3 berühren und eine weitere Unterteilung des Hohlraums 14 in ein noch feineres Kammersystem 7 bewirken.

Im Bereich von Rändern eines anderen Durchbruchs 6 kann die Schaumstofflage 8 verdichtet werden und verhindert so Relativbewegungen zwischen der Türinnenverkleidung 3 und der Schwerfolie 13 bzw. zwischen der Schwerfolie 13 und dem Türinnenteil 2 während des Betriebszustands des Kraftfahrzeugs, was sich geräuschmindernd auswirkt. Die zunächst unkomprimierte Schaumstofflage 8 im Randbereich wird für diesen Fall erst bei der Montage der Türinnenverkleidung 3 an das Türinnenteil 2 gepresst und ermöglicht durch die von der zusammengepressten Schaumstofflage 8 ausgehenden Rückstellkraft, die Abdichtung zwischen dem Türinnenteil 2 und der Türinnenverkleidung 3 gegen Zugluft.

Desweiteren ist denkbar, dass die Schaumstofflage 8, sich in ihrer Stärke verjüngend, auf die Ränder 11 zuläuft oder nicht bis zu den Rändern 11 des Durchbruchs 6 reicht, so dass im Bereich dieser Ränder 11 das Türinnenteil 2 mit der Türinnenverkleidung 3 bei dazwischen liegender Schwerfolie 13 verbunden ist.

Die Vorsprünge 4 des Dämmschaums 8 umlaufen den Durchbruch 6 vollständig, wodurch dieser gegen Zugluft abgedichtet ist und ein direkter Schalldurchtritt unterbunden wird. Gleichzeitig versteifen die Vorsprünge 4 durch die Berührung mit der Türinnenverkleidung 3 den Aufbau der Fahrzeugtür 5 im Bereich zwischen dem Türinnenteil 2 und der Türinnenverkleidung 3, was günstig auf eventuell auftretende Fahrgeräusche wirkt. Durch die rippenartigen Vorsprünge 4 wird zudem ein seitlicher Aufprall auf die Fahrzeugtür 5 gedämpft und vermindert somit das Risiko von Unfallfolgen.

## Patentansprüche

1. Fahrzeugtür (5) mit einem mit Durchbrüchen (6) versehenen Türinnenteil (2) und einer Türinnenverkleidung (3), wobei zwischen dem Türinnenteil (2) und der Türinnenverkleidung (3) eine Folie (1) angeordnet ist, auf der zwischen dieser und der Türinnenverkleidung (3) eine Schaumstofflage (8) aufgebracht ist,
**dadurch gekennzeichnet,**
- **dass** die Folie (1) durch eine Schwerfolie (13) gebildet ist
- **dass** die Schaumstofflage (8) durch einen offenporigen Dämmschaum (12) gebildet ist,
- **dass** der Dämmschaum (12) integral in Richtung der Türinnenverkleidung (3) als Rippen ausgebildete Vorsprünge (4) aufweist,
- **dass** die Vorsprünge (4) des Dämmschaums (12) die Türinnenverkleidung (3) berühren,
- **dass** durch die Vorsprünge (4) des Dämmschaums (12) ein Kammersystem (7) zwischen der Türinnenverkleidung (3) und der Schwerfolie (13) gebildet ist.

2. Fahrzeugtür nach Anspruch 1,
**dadurch gekennzeichnet,**
**dass** die Durchbrüche (6) des Türinnenteils (2), in Richtung der Türinnenverkleidung (3), vollständig umlaufend von den Vorsprüngen (4) des Dämmschaums (12) umrandet sind.

3. Fahrzeugtür nach Anspruch 1 oder 2,
**dadurch gekennzeichnet,**
**dass** die Schwerfolie (13) zumindest im Bereich der Durchbrüche (6) mit dem Türinnenteil (2) verklebt ist.

4. Fahrzeugtür nach einem der Ansprüche 1 bis 3,
**dadurch gekennzeichnet,**
**dass** der Dämmschaum (12) in montiertem Zustand im Bereich der Ränder (11) der Durchbrüche (6) des Türinnenteils (2) verdichtet ist.

5. Fahrzeugtür nach einem der Ansprüche 1 bis 4,
**dadurch gekennzeichnet,**
**dass** die Schwerfolie (13) als EPDM-Folie mit mindestens 0,8 oder 0,9 kg/m² ausgebildet ist.

## Claims

1. Vehicle door (5) comprising a inner door panel (2) provided with openings (6) and a door lining (3), with sheeting (1) located between the inner door panel (2) and the door lining (3), between which sheeting and the door lining (3) a foam layer (8) is applied,
**characterised in that**
- the sheeting (1) is represented by heavy sheeting ( 13),
- the foam layer (8) is represented by an open-cell insulating foam (12),
- the insulating foam (12) has integral projections (4) designed as ribs projecting towards the door lining (3),
- the projections (4) of the insulating foam (8) contact the door lining (3), and
- a chamber system (7) is created between the door lining (3) and the heavy sheeting (13) by the projections (4) of the insulating foam (12).

2. Vehicle door according to claim 1,
**characterised in that**
the openings (6) of the inner door panel (2) are completely and continuously surrounded by the projections (4) of the insulating foam (8).

3. Vehicle door according to claim 1 or 2,
**characterised in that**
the heavy sheeting (13) is bonded to the inner door panel (2) at least in the area of the openings (6).

4. Vehicle door according to any of claims 1 to 3,
**characterised in that**
the insulating foam (12) is compacted in the area of the edges (11) of the openings (6) in the installed state.

5. Vehicle door according to any of claims 1 to 4,
**characterised in that**
the heavy sheeting (13) is represented by EPDM sheeting with a weight of at least 0.8 or 0.9 kg/m².

## Revendications

1. Porte de véhicule (5) avec une partie intérieure de porte (2) munie d'ajours (6) et un garnissage intérieur de porte (3), une feuille (1) étant placée entre la partie intérieure de porte (2) et le garnissage intérieur de porte (3), sur laquelle une couche de mousse (8) est appliquée entre celle-ci et le garnissage intérieur de porte (3),
**caractérisée en ce que**
- la feuille (1) est formée par une feuille lourde (13) ,
- la couche de mousse (8) est formée par une mousse isolante (12) à pores ouverts,
- la mousse isolante (12) comporte des parties en saillie (4) formées comme nervures solidairement dans la direction du garnissage intérieur de porte (3),
- les parties en saillie (4) de la mousse isolante (12) sont en contact avec le garnissage intérieur de porte (3),
- un système de chambre (7) est formé entre le garnissage intérieur de porte (3) et la feuille lourde (13) par le biais des parties en saillie (4) de la mousse isolante (12).

2. Porte de véhicule selon la revendication 1, **caractérisée en ce que** les ajours (6) de la partie intérieure de porte (2) sont bordés sur toute la périphérie par les parties en saillie (4) de la mousse isolante (12), dans la direction du garnissage intérieur de porte (3).

3. Porte de véhicule selon la revendication 1 ou 2, **caractérisée en ce que** la feuille lourde (13) est collée avec la partie intérieure de porte (2) au moins dans la zone des ajours (6).

4. Porte de véhicule selon l'une quelconque des revendications 1 à 3, **caractérisée en ce que** la mousse isolante (12) est comprimée à l'état monté dans la zone des bords (11) des ajours (6) de la partie intérieure de porte (2) .

5. Porte de véhicule selon l'une quelconque des revendications 1 à 4, **caractérisée en ce que** la feuille lourde (13) est formée comme une feuille en EPDM d'au moins 0,8 ou 0,9 kg/m².
